# EUROPEAN PATENT SPECIFICATION

(11) **EP 0 833 471 B1**
(45) Date of publication and mention of the grant of the patent: **11.06.2003**
(21) Application number: 96115569.4
(22) Date of filing: 27.09.1996
(51) Int. Cl.: H04J 3/16

(54) **Method for data transfer between two or more stations via communication channel and transmitting station and a receiving station for the use in the method**
Übertragungsverfahren zwischen zwei oder mehr Stationen über einen Kommunikationskanal und Sende- und Empfangsstation zur Verwendung des Verfahrens
Méthode pour le transfert de données entre deux ou plusieurs stations via un canal de communication et stations émettrices et réceptrices pour la mise en oeuvre de cette méthode

(43) Date of publication of application: 01.04.1998
(73) Proprietor: DEUTSCHE THOMSON-BRANDT GMBH, 78048 Villingen-Schwenningen (DE)
(72) Inventor: Herpel, Carsten, 30171 Hannover (DE)
(74) Representative: Hartnack, Wolfgang, Dipl.-Ing.

(56) References cited:
- EP-A- 0 428 407
- US-A- 5 229 992
- US-A- 5 315 584

## Description

The present invention relates to a method for data transfer between two or more stations via a communication channel and respective transmitting and receiving stations for the use in this method.

### Background

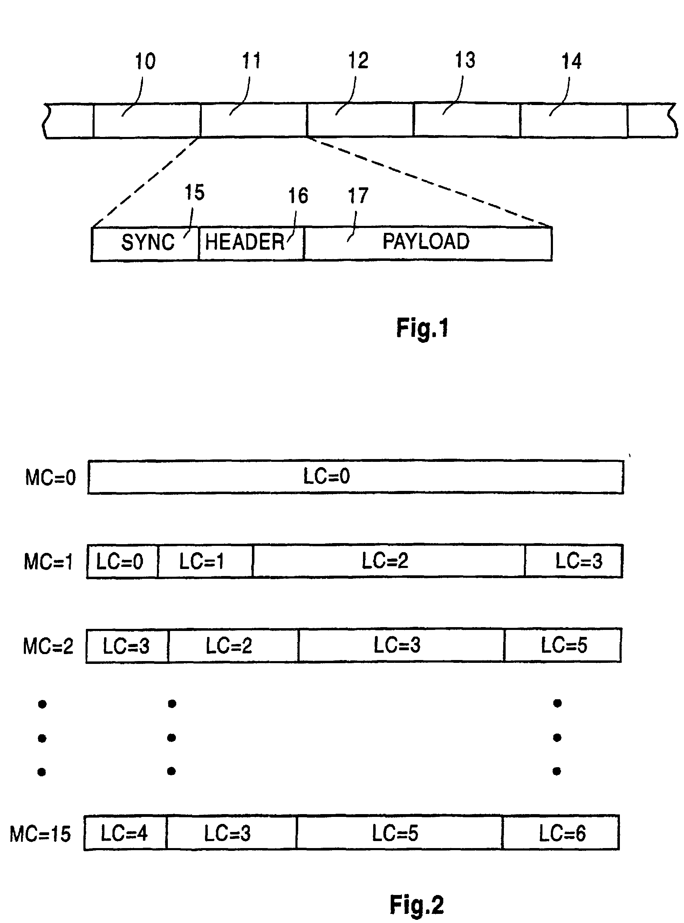

In ITU-T recommendations H.223 and H.223A (Annex A) two versions of a time division multiplex scheme are defined. The former has a variable packet length and the latter a fixed packet length. The structure of this multiplex packet always is a SYNC-word, header and payload as shown in Fig. 1. Common feature of both schemes is the ability to efficiently signal how the payload of a multiplex packet is shared between different logical channels. For this purpose a 4-Bit multiplex code MC is transmitted in each header of a multiplex packet. Each multiplex code references one out of 16 previously defined partitionings of the multiplex packet payload. The partitionings are defined in a multiplex table. This multiplex table has one entry for each partitioning of the multiplex packet payload. The definition of multiplex table entries is done via configuration messages which are sent from a multiplexing device to a respective demultiplexing device. The format of these messages is defined in ITU-T recommendation H.245. The communication channel usually is a single data line for communication between two single stations (Point-to-Point-communication).

Messages can preferably be exchanged in a special control logical channel (LC=0) within the multiplexed signal, if a connection between transmitter and receiver is already established.

In order to be able to start a communication, it is mandatory that one definition of a multiplex code like MC = 0 refers to a multiplex table entry that indicates that the whole multiplex packet contains only data for the special control logical channel LC=0, see Fig. 2. The transmitter may then set up the multiplex by transmitting configuration messages with some multiplex table entry definitions that specify the partitioning of the multiplex packet payload adapted to the bandwidth requirements of the data to be put into the various logical channels during this specific transmission. Examples of some payload partitionings are shown in Fig. 2. According to ITU-T recommendation H.223, an amount of 65536 different logical channels are allowed. In Fig. 2 only a few of them are shown. In general, more than four different logical channels could be contained in the payload data field of a multiplex data packet.

The explained scheme allows for a highly dynamical adaptation of the packet partitioning to the instantaneous bandwidth needs of the data sources that use the transmission link. However, in this scheme it is not easily possible to assign portions of the multiplex packet payload permanently to one or more given logical channels that have constant bandwidth requirements. The only way to achieve this in the current scheme would be to repeat the definition of the partitions for the logical channels which have constant bandwidth requirements with every definition of a multiplex table entry. Since the size of the configuration messages which define new multiplex table entries increases, if more partitions have to be described, this is a serious disadvantage especially, if it can be foreseen that various multiplex table entries need to be frequently redefined during the transmission because of varying bandwidth needs of the other data sources.

An example of a prior art system which allows dynamic allocatability of bandwidth among a plurality of channels is described in EP-A-0 428 407. At least three different types of information can be carried on the channels, and the bandwidth of each channel is dynamically adjustable so that it can be changed according to a determinable scheme. An integrated communications link sends error control information with a message that informs the receiver how the bandwidth is to be allocated.

### Summary of the invention

It is, therefore, an object of the present invention to modify the existing signalling scheme for reconfiguring the payload partitioning so that the above-mentioned disadvantage will be overcome.

The object of the invention is achieved by the method disclosed in claim 1. It is a further object of the invention to disclose a transmitting apparatus which utilises the inventive method. This object is achieved by the apparatus disclosed in claim 9.

It is a further object of the invention to disclose a receiving method and a corresponding apparatus which utilises the inventive method. This object is achieved by the method disclosed in claim 8 and the apparatus disclosed in claim 10.

According to the invention, one or more fixed time slots are defined by one or more appropriate configuration messages which assign a determined time slot to a respective logical channel. So, a number of Bits/Bytes are allocated to a given logical channel independent of the multiplex code. In cases where the bandwidth requirements vary from time to time for the other logical channels, new partitionings of respective data packets can be signalled via configuration messages which are similar to those that are defined in the H.223 recommendation. However, for the already defined fixed slots, no additional information has to be transmitted. Therefore, a certain amount of transportation capacity is spared. The size of the multiplex table entry definition messages can thus be distinctly decreased.

Additional embodiments of the inventive method are resulting from the respective dependent claims. The fixed time slots may be valid for data packets of different types, irrespective of an assigned multiplex code, which defines the said data packet type. The advantage of this embodiment is that with only one configuration message fixed data slots are defined for various different data packet types. Therefore, there is not much overhead for defining fixed slots in the system.

In an alternative embodiment the fixed time slot may be valid for a single type of data packets. This measure allows the solution of the following problem. Sometimes data sources exist that have fixed bit rate behaviour, if they are active but only become active at irregular intervals. In these cases globally fixed slots are not adequate, since buffering would be needed to equalise the bursty nature of the incoming data rate. However, buffering increases the delay which would not be acceptable in all applications.

The following assumptions may sometimes be valid: First, it is assumed that only one of the possible data packet types shall be used each time a multiplex packet must be constructed with data from a given set of logical channels. This may happen for example because the total number of logical channels to be multiplexed is very high and the number of data packet types is limited. Second it is assumed that some of these logical channels have the above-mentioned fixed bit rate behaviour. If only those logical channels were concerned then the selected data packet type would only have to be defined once and would always be suitable to construct data packets that multiplex data from those logical channels. Third, it is assumed that some of the logical channels that shall be multiplexed in the remainder of the same data packet have variable bit rate behaviour. This means that the definition of the above-mentioned data packet type needs to be changed frequently, especially, if buffering shall be minimised. For such a case, it is therefore a distinctive advantage, if fixed time slots could be assigned to the first set of logical channels having the fixed bit rate behaviour, if they are active, but only become active at irregular intervals. For this case the following new way of defining and redefining a multiplex table entry is suggested:
1. When first defining a data packet type, mark those slots that carry data from the fixed bit rate channels as fixed. Continue with the first definition of the remainder of the partitioning for this data packet type.
2. The fixed slots should be put at the beginning of the packet. Then only the position up to which the slots have to be considered as "fixed" has to be signalled.
3. When redefining the data packet type, signal that the slots previously marked as "fixed" do not change and only redefine the remainder of the partitioning for this data packet type.
4. If the fixed slots need to be redefined, this may be done as described in step 1.

Further advantageous embodiments of the inventive method are given in dependent claims. The measure to assign a numerical label to one or more fixed time slots of the time division multiplex has the advantage, that it is possible to unambiguously reference this slot in subsequent messages. Thereby, not much bits are necessary to refer to this fixed time slot. In case of multiple slots assigned by this mechanism, the value of the numerical label indicates the position of the assigned slot in the multiplex packet payload. Slots will be positioned in ascending order of their numerical label.

It is also easily possible to subsequently increase or decrease the size of a slot or delete a slot by further configuration messages referring back to this numerical label.

To delete a fixed time slot, a simple configuration message is sent to the receiving station (s) which simply carries the numerical label of this fixed time slot without further defining information items.

Furthermore, the provision is made that the numerical label of a deleted fixed time slot remains unused until in a further configuration message a fixed time slot with this numerical label is reopened and positioned in the payload according to the rule defined in the previous description. This has the advantage that the labels of assigned slots will never change.

The measure, that not only one time slot but a sequence of time slots assigned to different logical channels may be defined as a fixed time slot has the advantage that these time slots can only be modified or deleted jointly. Depending on the application and the number of logical channels, this may be necessary.

It has to be considered that the receiver will not be able to process the contents of the whole multiplex payload, if it has wrong assumptions about the partitioning of the payload. In case of a Point-to-Point-transmission, the configuration messages for the definition of the multiplex table entry will be sent in an acknowledged way that this situation will not occur. However, in a broadcast scenario, this is not possible. By inserting a toggle-flag in the header of a data packet which, each time a configuration message is sent changes its state when the new configuration is first used, this situation can be remedied. With this provision, the demultiplexing device at least knows that it will not be able to process a multiplex packet payload and may trigger necessary action of the user of the transmitted data. Also the re-transmittance of each configuration message periodically will remedy this situation.

An advantageous embodiment of the inventive transmitting station is resulting from claim 9. An advantageous embodiment of the inventive receiving station results from claim 10.

### Drawings

Preferred embodiments of the invention are described with reference to the accompanying drawings, which show in:
- Fig. 1: successive data packets of a time division multiplex and the structure of each data packet;
- Fig. 2: examples of some partitionings of the data field for the payload of a data packet;
- Fig. 3: a block diagram of a receiving station and a transmitting station;
- Fig. 4: an example for separate fixed time slots;
- Fig. 5: an example for a fixed time slot having more than one logical channel assigned;
- Fig. 6: a fixed time slot which is assigned to a single data packet type;
- Fig. 7: the structure of a first configuration message;
- Fig. 8: the structure of a second configuration message;
- Fig. 9: the structure of a third configuration message;
- Fig. 10: the structure of a fourth configuration message and
- Fig. 11: the structure of a second embodiment of a data packet of the time division multiplex.

### Preferred embodiments

As already notified, valuable information concerning this invention is included in the text documents of the International Telecommunication Union ITU-T recommendations H.223 and H.245.

Referring now to Fig. 1, it shows a section of a time division multiplex data stream which is sent via one communication channel. Reference numbers 10 to 14 refer to succeeding data packets. The structure of these data packets is for every data packet identical. For data packet 11, the structure is shown with more details. Reference number 15 refers to a first data field which is suited to carry the synchronisation information SYNC for the data packet. The second data field 16 carries the HEADER information of the data packet. The third data field 17 carries the PAYLOAD of the data packet.

In Fig. 2, different kinds of partitionings of data field 17 of a data packet are shown. The first shown partitioning having the multiplex code MC = 0 is the simplest partitioning because it carries only one logical channel LC = 0. In H.223 recommendation 16 different partitionings are allowed for a data packet. Therefore, the multiplex code can have the values 0 to 15. The partitioning having the multiplex code MC = 1 allows the transportation of relevant data of the four different logical channels LC = 0 to LC = 3. It can easily be seen that the amount of data bytes which are assigned to each logical channel are different for each logical channel. The partitioning of the data packet data field 17 may vary with respect to the numbers of logical channels and also with respect to the amount of data bytes which are assigned to each logical channel. Different partitionings are shown for the data packet types having the multiplex codes MC = 2 and MC = 15.

A logical channel will carry all data for a certain data source. Examples for this are video data from a video source, audio data for different audio channels, teletext data, control data, telephone data, telefax data, electronic-mail data, etc..

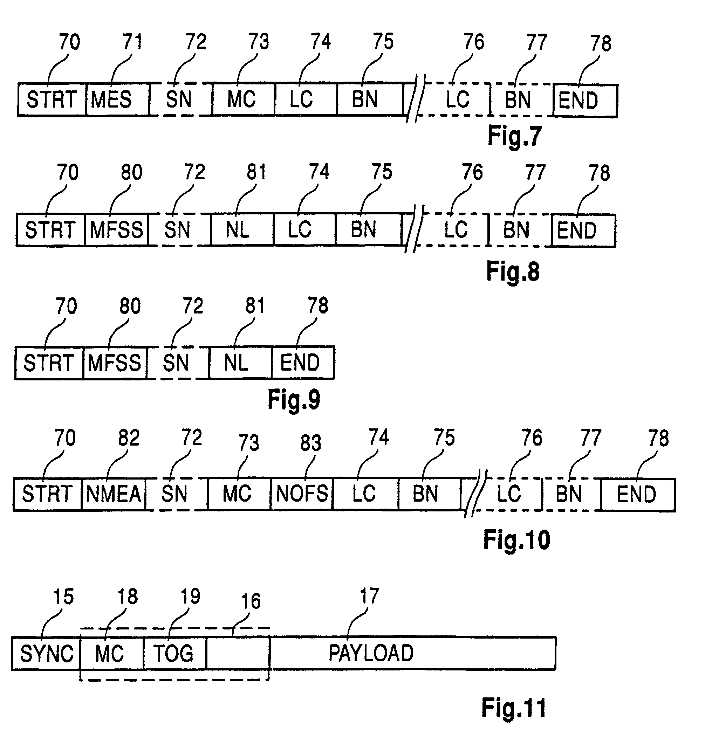

In the header of each data packet a multiplex code MC is included. This multiplex code signals to the receiving end which kind of partitioning is used for this data packet. All used partitionings have to be predefined with previous configuration messages, so that the receiving station of a data packet is capable of analysing the payload of the respective data field. A so-called multiplex table is set in each receiving station for this purpose. The multiplex table has an entry for each possible partitioning of the data field of a data packet. Therefore, there are 16 different table entries in our above-mentioned example. For defining a multiplex table entry a so-called MultiplexEntrySent-message is used. Fig. 7 shows a simplified structure of such a MultiplexEntrySent-message. Reference number 70 shows a data field for a start flag STRT. This start flag will be in the bit stream a sequence of bits which have an unmistakable sequence. Bit-stuffing can be used for this purpose. Reference number 71 refers to a data field which carries an information item that identifies the configuration message MultiplexEntrySent. This information item is abbreviated with MES. After data field 71 an optional data field 72 follows. Data field 72 carries a so-called sequence number SN. The sequence number is used to differentiate the different configuration messages in case where several configuration messages are sent one after another. The next data field 73 carries the multiplex code MC. In the fifth data field 74, a logical channel number LC is inserted. Data field 75 follows and carries the number of bytes which are assigned to the logical channel which is referred to in data field 74. The data fields 76 and 77 are optional. Here, more logical channels numbers LC and respective Byte numbers BN can be inserted. The MultiplexEntrySent-message ends with a data field for a closing flag END. The closing flag can also be an unmistakable sequence of bits in the bit stream.

The definition of such a MultiplexEntrySent message is made via a syntax description language (abstract syntax notation 1 ASN.1) as is shown hereunder. This abstract syntax notation 1 is standardised under the standardisation code ISO/IEC 8824. Reference is made to Fig. 7 which shows a simplified bitstream representation that corresponds to this formal notation.

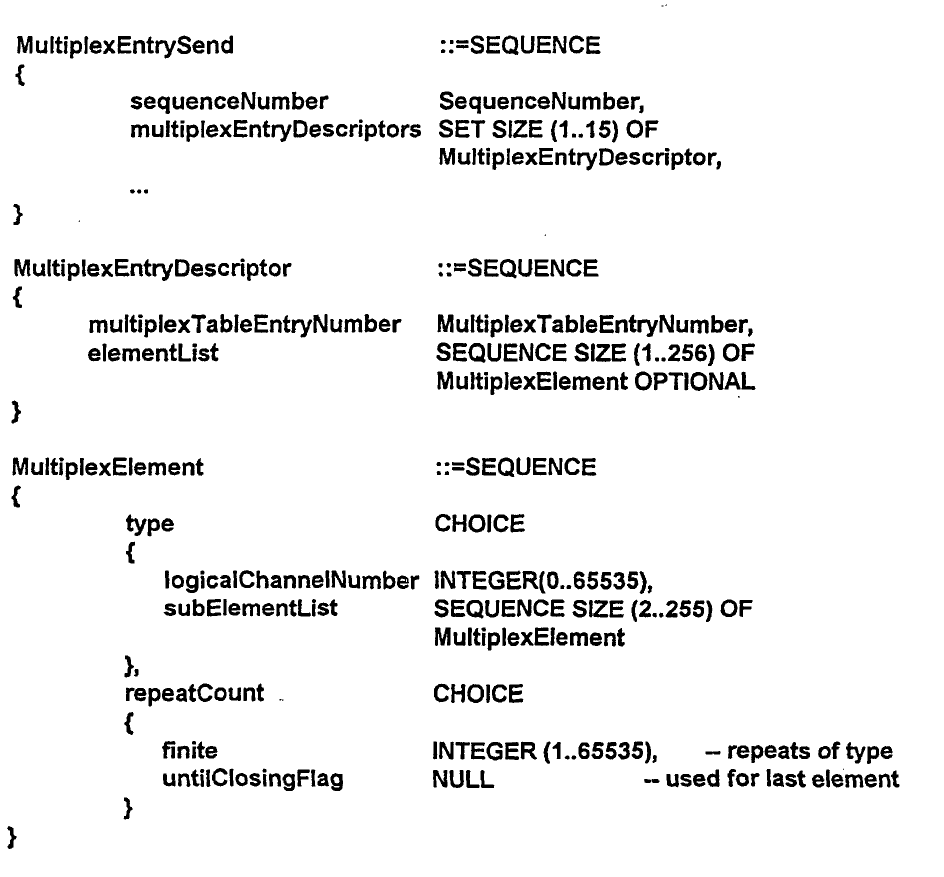

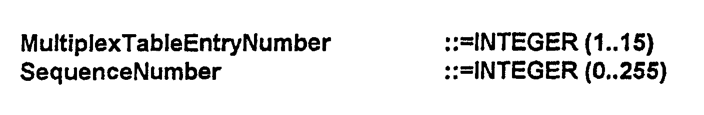

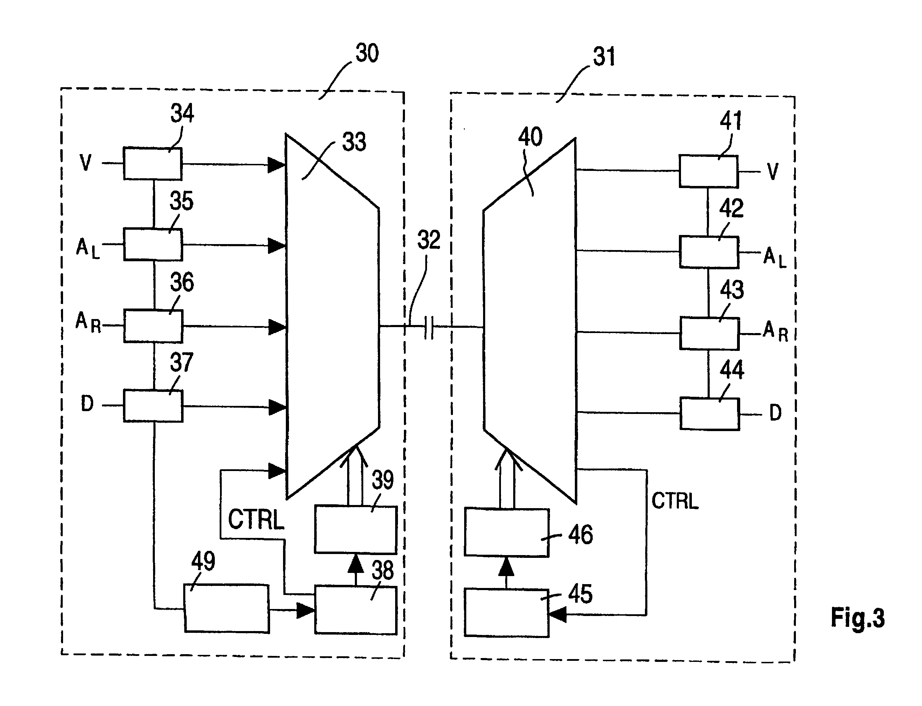

The invention will more precisely be described with respect to an example which is given in Fig. 3. Reference number 30 stands for a transmitting station and reference number 31 stands for a receiving station. Both stations which communicate with each other via a communication channel 32. The example is, therefore, a Point-to-Point-communication. However, the invention is not restricted to Point-to-Point-communication as already mentioned above. Reference number 33 marks a multiplexing device. The inputs of the multiplexing device 33 are connected to respective buffer memories 34 to 37. Buffer memory 34 stores all data coming from a video source like a video recorder which is not shown in detail. Buffer memory 35 stores all data coming from an audio source like the left audio channel of a stereo signal also coming from a video recording device (not shown). Buffer memory 36 stores all data of a second audio source like the right channel of a stereo signal coming also from the video recording device (not shown). Buffer memory 37 is provided for storing of all teletext data coming from a teletext decoding device which is also not shown but may be included in the video recording device. Reference number 49 refers to a analysing unit for the connected buffer memories 34 to 37. Analysing unit 49 calculates the data transport capacity needs for each logical channel which is connected to the multiplexing device 33. Due to different behaviours of data sources, these data transport capacity needs may vary from time to time. When the analysing unit 49 detects that one or more of the buffers 34 to 37 are filled-up more rapidly or more slowly than the time period before, it gives respective data to control unit 38. Control unit 38 generates a configuration message which redefines the partitioning of the data field of one or more data packets. This process will be explained more in detail with respect to Fig. 8. The configuration message will be,fed to the multiplexing device 33 via the data line CTRL. Furthermore, a programming device 39 is provided in the transmitting station. This programming device 39 is responsible for controlling the multiplexing device 33 as defined by control unit 38 which is connected to programming device 39. Therefore, the programming device 39 holds the actual mulitplex table for controlling the multiplexing device 33 for partitioning purposes.

Reference number 40 refers to a demultiplexing device in the receiving station 31. As an input of the demultiplexing device 40, the communication channel 32 is connected. The outputs of the demultiplexing device 40 are connected to respective buffer memories 41 to 44. Furthermore, there is also provided a second control unit 45 and a second programming device 46. Control unit 45 is adapted to analyse all incoming configuration messages via the respective CTRL output of the demultiplexing device 44. The actual multiplex table is stored in programming device 46. It is actualized by means of newly received configuration messages as already mentioned before. This actualisation takes place via the connection between control unit 45 and programming device 46. Buffer memories 41 to 44 are provided for storing all data of the respective logical channel which transports the video data, the audio data for the left channel of a stereo signal, and for the right audio channel of a respective stereo signal, and all videotext data.

In this example, five logical channels are needed to transport all data from the four data sources and the additional control data. Let the control data be assigned to logical channel LC =0. The video data is assigned for this example to the logical channel LC = 1. All audio data of the left stereo channel is assigned to the logical channel LC = 2. All audio data of the right audio channel of the stereo signal is assigned to a logical LC = 3. And last all video text data is assigned to a logical channel LC = 4. It is assumed that logical channels 2 and 3 will have data transport capacity needs (bandwidth requirements) of equal size. Therefore fixed time slots should be assigned to these logical channels.

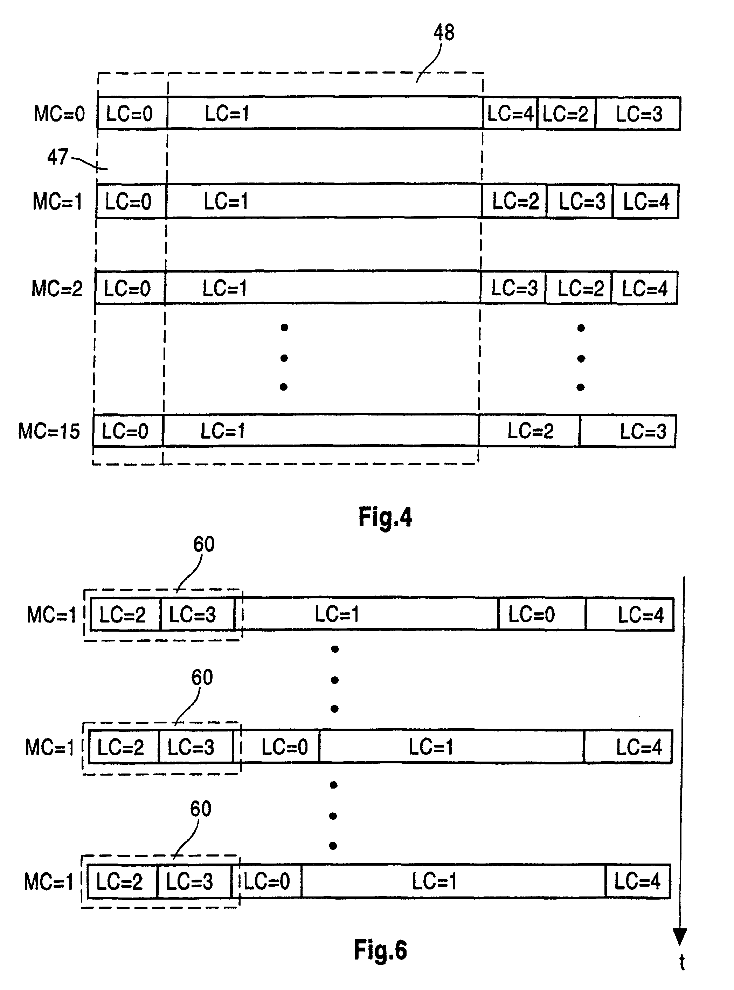

In Fig. 4 an example is given, where fixed time slots are defined for all possible data packets types with multiplex coda MC=0 to MC=15. In this example logical channel LC=0 is assumed to have stable band width requirements. Therefore, the first fixed time slot 47 is assigned to logical channel LC=0. It is further assumed, that the video data channel has stable data transport capacity need on a long term basis. Therefore, the second fixed time slot 48 is assigned to logical channel LC=1. Logical channels LC=2 to LC=4 are assumed to have variable band width requirements. Therefore, the time slots for these logical channels are not fixed for a longer time. Each time the data transport capacity need of such a logical channel LC=2 to LC=4 varies, a different type of data packet MC=0 to MC=15 may be used. In case a not-predefined data packet type will be appropriate for transportation of all data sources, a new partitioning must be defined via a certain configuration message.

First the configuration message for defining a fixed time slot will be explained. For this purpose it is referred to Fig. 8. There a so-called MultiplexFixedSlotSend-message is shown in a simplified way. All data fields of this message having the same reference number as shown in Fig. 7, define similar data fields and will not be describes once more. In configuration-message-identification-field 80 a so-called MultiplexFixedSlotSend-code MFSS is inserted. In data field 81 a numeric label NL is inserted which carries the number of the fixed time slot. If this number is identical to 1, this means, that the first fixed time slot is defined in this message. Which logical channels are assigned to this fixed time slot is given in the following data fields 74 to 77. Also the amount of data bytes for the respective logical channels are given in fields 75 and 77. There can be more than two logical channels assigned to one fixed time slot as indicated by the interruption of field 76. Going back to Fig. 4, it is easily seen, that the MultiplexFixedSlotSend-message having the numerical label 1 would carry only the data field 74 for the logical channel LC=0 and the data field 75 for the number of bytes BN for this logical channel LC=0. A second Multiplex-Fixed-Slot-Send-message has to be sent for the definition of the second fixed time slot 48 in Fig. 4. This second message would carry the numerical label NL=2 and the data field 74 carrying the logical channel number LC=1 and the data field 75 for carrying the number of bytes for logical channel LC=1 which is higher than the number of bytes for logical channel LC=0.

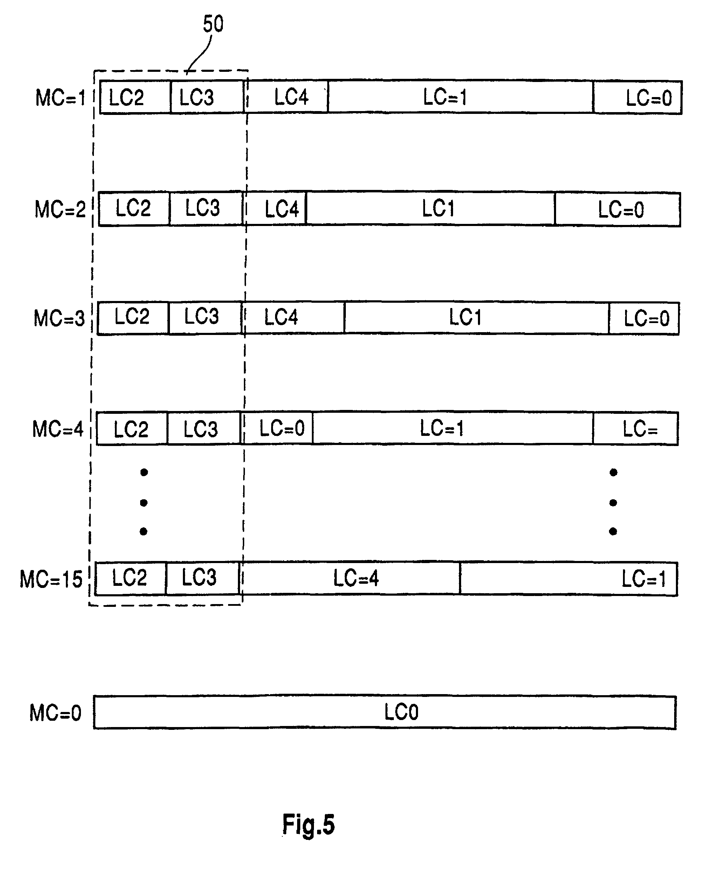

A second example for defining fixed time slots is given in Fig. 5. This embodiment is an example for the definition of a fixed time slot which contains two different logical channels LC=2 and LC=3. Therefore, in this example it is assumed, that the audio channels A_{L} and A_{R} have similar band width requirements for a longer time period. All other logical channels are allowed to have varying data transport capacity needs. Various partitionings of the data field of a multiplex data packet are shown in Fig. 5. A noticeable difference to Fig. 4 is, that the data packet type with multiplex code MC=0 is not covered by the fixed time slot 50. This is an exception which can also be allowed. The configuration message for defining the fixed time slot 50 has also the structure of the message shown in Fig. 8. Here it is notified, that the appropriate message will have numeric label NL=1 and will carry not only data fields 74 and 75 but also data fields 76 and 77. This is because two logical channels LC=2 and LC=3 are assigned to fixed time slot 50.

An example for the definition of the MultiplexFixedSlotSend-message is given below in abstract syntax notation 1.

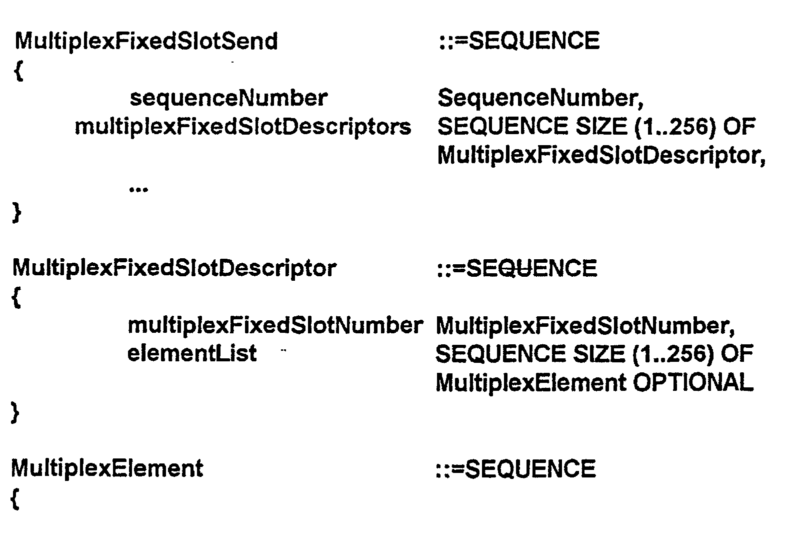

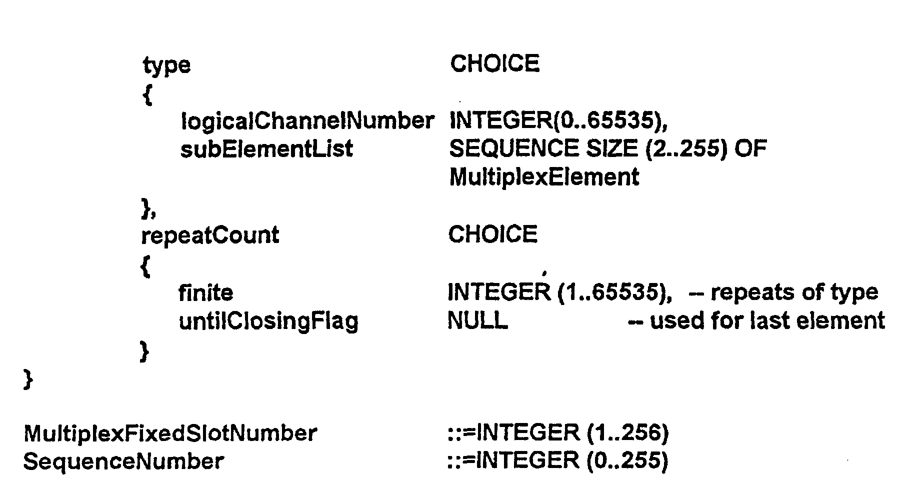

In this implementation changing a fixed time slot corresponds to sending a new MultiplexFixedSlotSend-message for an already assigned MultiplexFixedSlotNumber NL.

In Fig. 9 a simplified example of a MultiplexFixedSlotSend-message is given that signals that a defined fixed time slot should be deleted. It is apparent from this Fig. that this message does not contain a data field 74 and 75 for an assigned logical channel. This is the command for deleting the fixed time slot.

Another example of defining fixed time slots is given in Fig. 6. Here, the fixed time slot is not valid for a group of different data packet types but for a single data packet type, e. g. the data packet type having the multiplex code MC=1. Three data packets are shown in Fig. 6. In between each pair of these packets other packets will occur and MC=1 is redefined-between each pair of these packets. However, in all cases the logical channels LC=2 and LC=3 are jointly assigned to the fixed time slot 60. For these logical channels no modification occurs.

The simplified structure of a configuration message which defines such a fixed time slot 60 is shown in Fig. 10. In the new data field 82 a message identification information item NMEA is inserted. This information item NMEA defines, that a fixed time slot is to be created for only a single data packet type. Which data packet type should be used is given in data field 73. Therein the multiplex code MC is located, which defines which data packet type is meant. Most of the other data fields are already shown in Fig. 7, so that no further explanation for these data fields is necessary.

A new data field 83 is included in this NewMultiplexEntrySend-message. This field carries a number NOFS which gives the amount of multiplex elements in the data packet, which are fixed by this message. The assignment of more than one logical channel to a fixed time slot is here not provided.

An example, which defines the NewMultiplexEntrySend-message is given below in abstract syntax notation 1 (ASN.1).

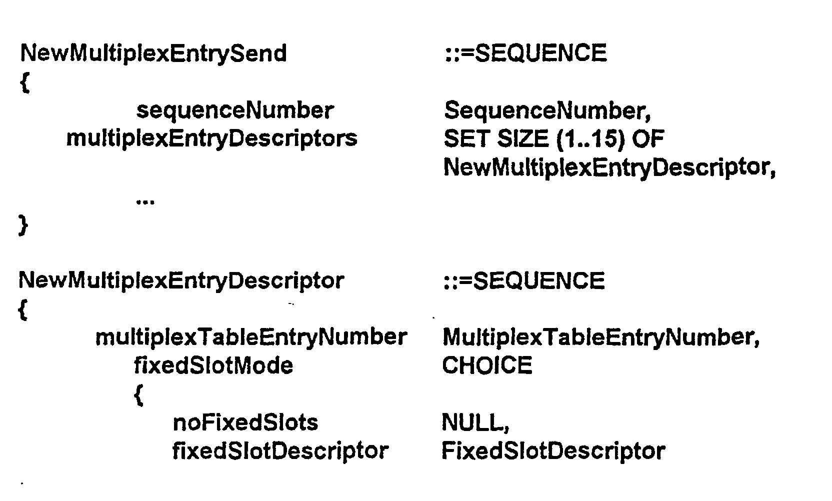

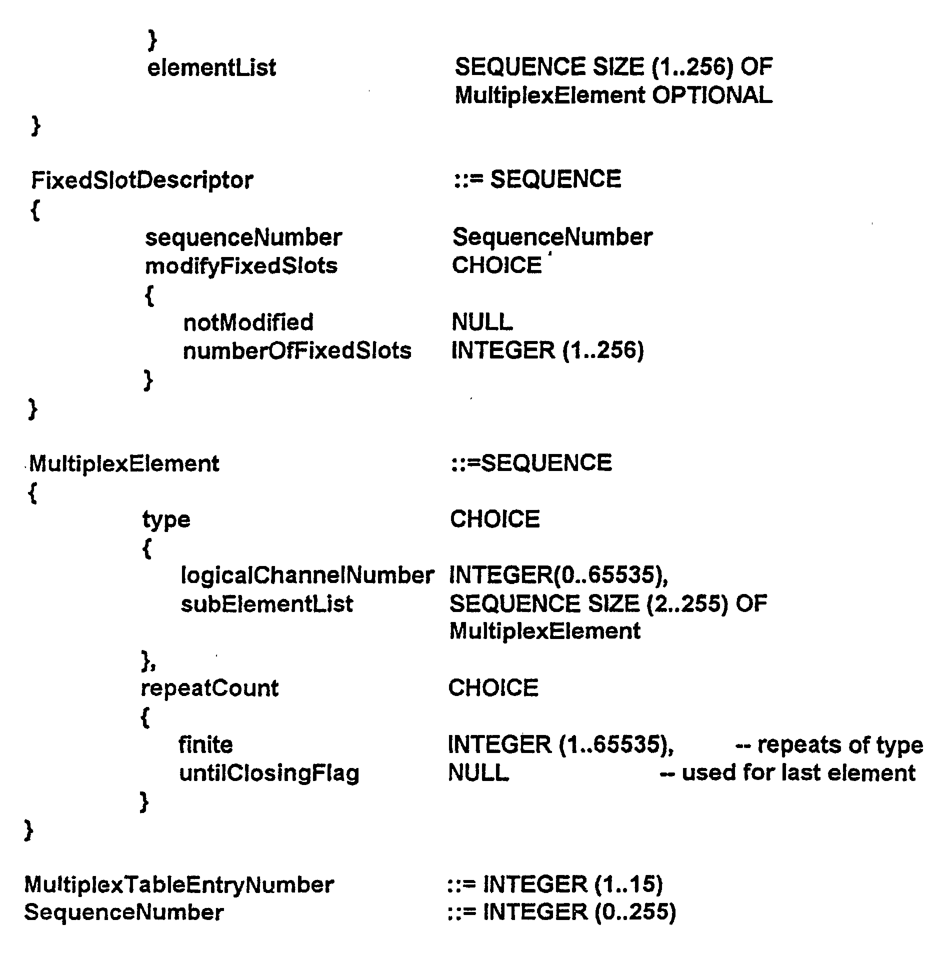

All examples of configuration messages given in Fig. 7 to 10 are examples and may be subject of modification. Appropriate acknowledged messages can be defined for each type of the given configuration messages. A new definition of a multiplex table MP will then be valid only after acknowledgment from the receiving station. Furthermore, it is pointed out, that the transmitting station can be modified in such a manner that it also can act as a receiving station and the other way round. This would be necessary for example for videophone applications.

For error detection purposes in configuration messages and also for the purpose of declaring a new multiplex table entry as valid a toggle-flag TOG is used. This toggle-flag is additionally put in each multiplex packet header. It shall change its state each time when a changed multiplex table entry definition is first used or if a fixed time slot is added, modified or deleted. The structure of a data packet including a toggle-flag is shown in Fig. 11. The toggle-flag is included in the data field for the header of the data packet. The data field for the toggle-flag is marked with reference number 19. Data field 18 is used for carrying the multiplex code MC. A way to recover a lost configuration message or to randomly access into an ongoing transmission is to periodically re-transmit all configuration messages.

## Claims

1. Method for transferring data using time division multiplexing, wherein said data are arranged in data packets (10 to 14), said data packets having data fields (17) which are subdivided into time slots which are assigned to various logical channels (LC=0 to LC=6), wherein a first configuration message is generated which specifies dynamic partitioning of the data fields (17) adapted to the bandwidth requirements of the data to be put into the various logical channels, **characterized in that** a second configuration message is generated which assigns a time slot (47, 48, 50, 60) to a logical channel (LC=0 to LC=3) on a permanent basis independent of the dynamic partitioning of the data fields (17) according to the first configuration message.

2. Method according to claim 1, wherein said permanent assignment of said time slot (47, 48, 50, 60) to said logical channel (LC=0 to LC=3) is valid until a new second configuration message has been sent which modifies or deletes said assignment.

3. Method according to one claim 1 or 2, wherein said permanent assigned time slot (47, 48, 50, 60) is positioned at the beginning of the data field (17).

4. Method according to one of claims 1 to 3, wherein a numeric label (81) is assigned to said permanent assigned time slot (47, 48, 50, 60), said numeric label (81) indicating the position of the assigned time slot in the data field (17).

5. Method according to claim 4, wherein said permanent assigned time slot (47, 48, 50, 60) is deleted by sending a second configuration message which carries only the numeric label (81) assigned to said permanent assigned time slot (47, 48, 50, 60) but no further data.

6. Method according to claim 5, wherein the numeric label (81) of a deleted permanent assigned time slot (47, 48, 50, 60) remains unused until in a further second configuration message a permanent assigned time slot (47, 48, 50, 60) with this numeric label (81) is reopened.

7. Method according to one of claims 1 to 6, wherein a toggle-flag-field (19) is inserted into the header of a data packet (10 to 14) and each time a second configuration message is sent, the state of the toggle-flag (19) is changed in that data packet (10 to 14) where the new configuration is first used.

8. Method for receiving data using time division multiplexing, wherein said data are arranged in data packets (10 to 14), said data packets having data fields (17) which are subdivided into time slots which are assigned to various logical channels (LC=0 to LC=6), wherein a first configuration message is analyzed which specifies dynamic partitioning of the data fields (17) adapted to the bandwidth requirements of the data to be put into the various logical channels, **characterized in that** a second configuration message is analyzed which assigns a time slot (47, 48, 50, 60) to a logical channel (LC=0 to LC=3) on a permanent basis independent of the dynamic partitioning of the data fields (17) according to the first configuration message.

9. Transmitter for transferring data using time division multiplexing, comprising:
multiplexing means (33) for time division multiplexing of data packets (10 to 14);
means (39) for subdividing data fields (17) of said data packets (10 to 14) into time slots and assigning various logical channels (LC=0 to LC=6) to said time slots;
a configuration message generator (38) for generating first and second configuration messages, wherein said first configuration message specifies dynamic partitioning of the data fields (17) adapted to the bandwidth requirements of the data to be put into the various logical channels and wherein said second configuration message assigns a time slot (47, 48, 50, 60) to a logical channel (LC=0 to LC=3) on a permanent basis independent of the dynamic partitioning of the data fields (17) according to the first configuration message.

10. Receiver for receiving time division multiplexed data, comprising:
a configuration message analyzer (45) for analyzing first and second configuration messages, wherein said first configuration message specifies dynamic partitioning of data fields (17) of received data packets (10 to 14) adapted to the bandwidth requirements of the data to be put into various logical channels and wherein said second configuration message assigns a time slot (47, 48, 50, 60) to a logical channel (LC=0 to LC=3) on a permanent basis independent of the dynamic partitioning of the data fields (17) according to the first configuration message;
means (46) for controlling demultiplexing means (40) based on said analyzed first and second configuration messages;
demultiplexing means (40) for time division demultiplexing of said logical channels (LC=0 to LC=6) assigned to said time slots in the data fields (17) of said received data packets.

## Patentansprüche

1. Verfahren zur Übertragung von Daten unter Verwendung von Zeit-Multiplex, bei dem die Daten in Datenpaketen (10 bis 14) angeordnet sind, wobei die Datenpakete Datenfelder (17) haben, die in Zeitschlitze unterteilt sind, die verschiedenen logischen Kanälen (LC=0 bis LC=6) zugeordnet sind, wobei eine erste Konfigurations-Nachricht erzeugt wird, die eine dynamische Unterteilung der Datenfelder (17) spezifiziert, die an die Bandbreiten-Erfordernisse der Daten angepasst ist, die in die verschiedenen logischen Kanäle eingegeben werden sollen, **dadurch gekennzeichnet, dass** eine zweite Konfigurations-Nachricht erzeugt wird, die einen Zeitschlitz (47, 48, 50, 60) einem logischen Kanal (LC=0 bis LC=3) auf einer permanenten Basis unabhängig von der dynamischen Unterteilung der Datenfelder (17) gemäß der ersten Konfigurations-Nachricht zuordnet.

2. Verfahren nach Anspruch 1, bei dem die permanente Zuordnung des Zeitschlitzes (47, 48, 50, 60) zu dem logischen Kanal (LC=0 bis LC=3) gültig ist, bis eine neue zweite Konfigurations-Nachricht gesendet worden ist, die die Zuordnung modifiziert oder löscht.

3. Verfahren nach Anspruch 1 oder 2, bei dem der permanent zugeordnete Zeitschlitz (47, 48, 50, 60) am Beginn des Datenfeldes (17) positioniert wird.

4. Verfahren nach einem der Ansprüche 1 bis 3, bei dem ein numerisches Label (81) dem permanent zugeordneten Zeitschlitz (47, 48, 50, 60) zugeordnet wird, wobei das numerische Label (81) die Position des zugeordneten Zeitschlitzes in dem Datenfeld (17) anzeigt.

5. Verfahren nach Anspruch 4, bei dem der permanent zugeordnete Zeitschlitz (47, 48, 50 60) durch Senden einer zweiten Konfigurations-Nachricht gelöscht wird, die nur das numerische Label (81) trägt, das dem permanent zugeordneten Zeitschlitz (47, 48, 50, 60) zugeordnet ist, aber keine weiteren Daten.

6. Verfahren nach Anspruch 5, bei dem das numerische Label (81) eines gelöschten permanent zugeordneten Zeitschlitzes (47, 48, 50, 60) unbenutzt bleibt, bis in einer weiteren zweiten Konfigurations-Nachricht ein permanent zugeordneter Zeitschlitz (47, 48, 50, 60) mit diesem numerischen Label (81) wieder geöffnet wird.

7. Verfahren nach einem der Ansprüche 1 bis 6, bei dem ein Umschalt-Kennzeichen-Feld (19) in dem Header eines Datenpakets (10 bis 14) eingefügt wird und jedes Mal, wenn eine zweite Konfigurations-Nachricht gesendet wird, der Zustand des Umschalt-Kennzeichens (19) in dem Datenpaket (10 bis 14) geändert wird, wo die neue Konfiguration zuerst verwendet wird.

8. Verfahren zum Empfangen von Daten unter Verwendung von Zeit-Multiplex, bei dem die Daten in Paketen (10 bis 14) angeordnet sind, wobei die Datenpakete Datenfelder (17) haben, die in Zeitschlitze unterteilt sind, die verschiedenen logischen Kanälen (LC=0 bis LC=6) zugeordnet sind, wobei eine erste Konfigurations-Nachricht analysiert wird, die eine dynamische Unterteilung der Datenfelder (17) spezifiziert, die an die Bandbreiten-Erfordernisse der Daten angepasst ist, die in die verschiedenen logischen Kanäle eingegeben werden sollen, **dadurch gekennzeichnet, dass** eine zweite Konfigurations-Nachricht analysiert wird, die einen Zeitschlitz (47, 48, 50, 60) einem logischen Kanal (LC=0 bis LC=3) auf einer permanenten Basis unabhängig von der dynamischen Unterteilung der Datenfelder (17) gemäß der ersten Konfigurations-Nachricht zuordnet.

9. Sender zum Übertragen von Daten unter Verwendung von Zeit-Multiplex, umfassend:
Multiplex-Mittel (33) zum Zeit-Multiplexen von Datenpaketen (10 bis 14) ;
Mittel (39) zum Unterteilen von Datenfeldern (17) der Datenpakete (10 bis 14) in Zeitschlitze und zum Zuordnen verschiedener logischer Kanäle (LC=0 bis LC=6) zu den Zeitschlitzen;
Einen Konfigurations-Nachrichten-Generator (38) zum Erzeugen von ersten und zweiten Konfigurations-Nachrichten, wobei die erste Konfigurations-Nachricht eine dynamische Unterteilung der Datenfelder (17) spezifiziert, die an die Bandbreiten-Erfordernisse der Daten angepasst sind, die in die verschiedenen logischen Kanäle eingegeben werden sollen, und wobei die zweite Konfigurations-Nachricht einen Zeitschlitz (47, 48, 50, 60) einem logischen Kanal (LC=0 bis LC=3) auf einer pernamenten Basis unabhängig von der dynamischen Unterteilung der Datenfelder (17) gemäß der ersten Konfigurations-Nachricht zuordnet.

10. Empfänger zum Empfang von Zeit-Multiplex-Daten umfassend:
einen Konfigurations-Nachrichten-Analysierer (45) zum Analysieren einer ersten und einer zweiten Konfigurations-Nachricht, wobei die erste Konfigurations-Nachricht die dynamische Unterteilung von Datenfeldern (17) von empfangenen Datenpaketen (10 bis 14) spezifiziert, die an die Bandbreiten-Erfordernisse der Daten angepasst sind, die in verschiedene logische Kanäle eingegeben werden sollen, und wobei die zweite Konfigurations-Nachricht einen Zeitschlitz (47, 48, 50, 60) einem logischen Kanal (LC=0 bis LC=3) auf einer permanenten Basis unabhängig von der dynamischen Unterteilung der Datenfelder (17) gemäß der ersten Konfigurations-Nachricht zuordnet;
Mittel (46) zum Steuern von Demultiplex-Mitteln (40) auf der Basis der analysierten ersten und zweiten Konfigurations-Nachricht;
Demultiplex-Mittel (40) zum Zeit-Demultiplexen der logischen Kanäle (LC=0 bis LC=6), die den Zeitschlitzen in den Datenfeldern (17) der empfangenen Datenpakete zugeordnet sind.

## Revendications

1. Méthode pour le transfert de données utilisant le multiplexage temporel, où lesdites données sont organisées en paquets de données (10 à 14), lesdits paquets de données possédant des champs de données (17) subdivisés en intervalles de temps affectés à divers canaux logiques (LC=0 à LC=6), où un premier message de configuration spécifiant le partitionnement dynamique des champs de données (17) adapté aux besoins en largeur de bande des données à placer dans les divers canaux logiques est généré, **caractérisée en ce qu'**un deuxième message de configuration affectant un intervalle de temps (47, 48, 50, 60) à un canal logique (LC=0 à LC=3) sur une base permanente indépendamment du partitionnement dynamique des champs de données (17) conformément au premier message de configuration est généré.

2. Méthode selon la revendication 1, dans laquelle ladite affectation permanente dudit intervalle de temps (47, 48, 50, 60) audit canal logique (LC=0 à LC=3) est valide jusqu'à ce qu'un nouveau second message de configuration modifiant ou supprimant ladite affectation ait été envoyé.

3. Méthode selon la revendication 1 ou 2, dans laquelle ledit intervalle de temps (47, 48, 50, 60) affecté de façon permanente est positionné au début du champ de données (17).

4. Méthode selon l'une des revendications 1 à 3, dans laquelle un label numérique (81) est affecté audit intervalle de temps (47, 48, 50, 60) affecté de façon permanente, ledit label numérique (81) indiquant la position de l'intervalle de temps affecté dans le champs de données (17).

5. Méthode selon la revendication 4, dans laquelle ledit intervalle de temps (47, 48, 50, 60) affecté de façon permanente est supprimé via l'envoi d'un deuxième message de configuration transmettant uniquement le label numérique (81) affecté audit intervalle de temps (47, 48, 50, 60) affecté de façon permanente et aucune autre donnée.

6. Méthode selon la revendication 5, dans laquelle ledit label numérique (81) d'un intervalle de temps affecté de façon permanente supprimé (47, 48, 50, 60) reste inutilisé jusqu'à ce que dans un deuxième message de configuration un intervalle de temps affecté de façon permanente (47, 48, 50, 60) possédant ce label numérique soit rouvert.

7. Méthode selon l'une des revendications 1 à 6, dans laquelle un champ d'indicateur à bascule (19) est inséré dans l'en-tête d'un paquet de données (10 à 14) et à chaque envoi d'un deuxième message de configuration, l'état de l'indicateur à bascule (19) change dans le paquet de données (10 à 14) dans lequel la nouvelle configuration est utilisée pour la première fois.

8. Méthode pour la réception de données utilisant le multiplexage temporel, dans laquelle lesdites données sont organisées en paquets de données (10 à 14), lesdits paquets possédant des champs de données (17) subdivisés en intervalles de temps affectés à divers canaux logiques (LC=0 à LC=6), où un premier message de configuration spécifiant le partitionnement dynamique des champs de données (17) adapté aux besoins en largeur de bande des données à placer dans les divers canaux logiques est analysé, **caractérisée en ce qu'**un deuxième message de configuration affectant un intervalle de temps (47, 48, 50, 60) à un canal logique (LC=0 à LC=3) sur une base permanente indépendamment du partitionnement dynamique des champs de données (17) conformément au premier message de configuration est analysé.

9. Emetteur pour le transfert de données utilisant le multiplexage temporel et comportant :
un dispositif de multiplexage (33) pour le multiplexage temporel desdits paquets de données (10 à 14) ;
un dispositif (39) permettant de subdiviser des champs de données (17) desdits paquets de données (10 à 14) en intervalles de temps et d'affecter divers canaux logiques (LC=0 à LC=6) auxdits intervalles de temps ;
un générateur de messages de configuration (38) pour générer lesdits premier et deuxième messages de configuration, où ledit premier message de configuration spécifie le partitionnement dynamique des champs de données (17) adapté aux besoins en largeur de bande des données à placer dans les divers canaux logiques et où ledit deuxième message de configuration affecte un intervalle de temps (47, 48, 50, 60) à un canal logique (LC=0 à LC=3) sur une base permanente indépendamment du partitionnement dynamique des champs de données (17) conformément au premier message de configuration.

10. Récepteur pour la réception des données à multiplexage temporel et comportant :
un analyseur de messages de configuration (45) pour l'analyse desdits premier et deuxième messages de configuration, où ledit premier message de configuration spécifie le partitionnement dynamique des champs de données (17) des paquets de données reçus (10 à 14) adapté aux besoins en largeur de bande des données à placer dans les divers canaux logiques et où ledit deuxième message de configuration affecte un intervalle de temps (47, 48, 50, 60) à un canal logique (LC=0 à LC=3) sur une base permanente indépendamment du partitionnement dynamique des champs de données (17) conformément au premier message de configuration ;
un dispositif (46) permettant de contrôler le dispositif de démultiplexage (40) en fonction desdits premier et deuxième messages de configuration analysés ;
un dispositif de démultiplexage (40) pour le démultiplexage temporel desdits canaux logiques (LC=0 à LC=6) affectés auxdits intervalles de temps dans les champs de données (17) desdits paquets de données reçus.
